# DEMANDE DE BREVET EUROPEEN

(11) **EP 4 545 194 A1**
(43) Date de publication de la demande: **30.04.2025**
(21) Numéro de dépôt: 24208830.0
(22) Date de dépôt: 25.10.2024
(51) Int. Cl.: B09B 3/35, B02C 13/04, B02C 13/282, B29B 17/02, B03B 9/06, B02C 13/28, H01M 10/54, B09B 101/15

(54) **DISPOSITIF DE DÉSASSEMBLAGE MÉCANISÉ DE DEEE DE PETITES DIMENSIONS, ET PROCÉDÉ DE DÉSASSEMBLAGE MÉCANISÉ UTILISANT LEDIT DISPOSITIF**

(30) Priorité: 26.10.2023 BE 202305888
(71) Demandeur: Comet Traitements, 6200 Châtelet (BE)
(72) Inventeur: BODSON, Vincent, 6120 Nalinnes (BE); BODSON, Claude, 6110 Montigny-Le-Tilleul (BE); BAREEL, Pierre-François, 4130 Esneux (BE); LEWIS, Grégory, 4910 Theux (BE)
(74) Mandataire: Calysta NV

(57) **Abrégé**

L'invention concerne un dispositif (1) de désassemblage de petits déchets d'équipements électriques et électroniques, comprenant (i) une enceinte cylindrique (2), (ii) un axe rotatif (3) horizontal; (iii) une pluralité de groupes de chaînes (4) sur l'axe rotatif, (iv) un moyen de mise en rotation (5) de l'enceinte ; (v) un moyen de mise en rotation (6) de l'axe rotatif ; (vi) un moyen d'alimentation (7) ; et (vi) un moyen d'évacuation (8) ; l'enceinte étant munie, sur sa surface interne, de moyens de guidage apte à faire avancer les déchets ou sein de l'enceinte.

## Description

### Domaine technique

La présente invention se situe dans le domaine du traitement sélectif et du recyclage de déchets, en particulier des déchets d'équipements électriques et électroniques.

En particulier, l'invention concerne un dispositif permettant un désassemblage mécanisé des déchets d'équipements électriques et électroniques de petites dimensions afin d'isoler les différents composants des DEEE et, en particulier, afin d'extraire les piles et batteries qu'ils renferment de manière efficace, sans danger et sans les endommager. L'invention concerne également un procédé de désassemblage utilisant ledit dispositif.

### Art antérieur

Les « Déchets d'Équipements Électriques et Électroniques », aussi désignés par les acronymes « DEEE » ou « D3E », regroupent tous les objets ou les composants d'objets hors d'usage qui fonctionnent grâce à des courants électriques ou électromagnétiques (tension ne dépassant pas 1000 volts en courant alternatif et 1500 volts en courant continu), que ces courants soient fournis par branchement sur une prise ou grâce à des piles ou des batteries. Ce terme regroupe donc un grand nombre d'appareils aux dimensions et poids très variés. Ils sont en général classés comme suit :
- Les gros appareils ménagers ;
- Les petits appareils ménagers ;
- Les équipements informatiques et de télécommunications ;
- Le matériel d'éclairage (à l'exception des appareils d'éclairage domestique et des ampoules à filament) ;
- Les outils électriques et électroniques (à l'exception des gros outils industriels fixes) ;
- Les jouets, équipements de loisir et de sport ; et
- Les écrans plats ou écrans cathodiques.

Selon leur taille, on définit en particulier un flux de DEEE qualifié de « DEEE de petites dimensions » ou « petits DEEE », qui est collecté dans les centres de collecte/tri. Ces petits DEEE, aussi appelés PAM (pour « Petits appareils en mélange»), comprennent, par exemple, de l'outillage (foreuses, visseuses, nettoyeurs de vitres, petits aspirateurs à main,...), des équipements informatiques et de télécommunication (téléphones, GSM, écouteurs sans fil, souris,...), des appareils ménagers et de beauté (sèche-cheveux, rasoirs, mixers, brosses à dents électriques,...) et d'autres appareils électroniques tels que radios, jouets, cigarettes électroniques, appareils photos, commandes à distance. Ils contiennent en grande partie des plastiques et des métaux mais ils contiennent également très souvent des batteries ou des piles (laissées à l'intérieur par l'utilisateur).

Après leur collecte et à leur arrivée dans un centre de traitement, les DEEE de petites dimensions subissent différentes opérations consécutives destinées à leur recyclage. La première étape est un démantèlement (ou désassemblage) consistant en la séparation des différents composants constitutifs des appareils et, notamment, la récupération des piles et batteries et éventuellement, des circuits imprimés et condensateurs qui pourront ensuite être recyclés de façon appropriée. Pour l'extraction spécifique des piles et batteries des DEEE, on parle parfois également de « dépollution » des DEEE.

L'étape de désassemblage des DEEE de petites dimensions en centre de traitement se fait généralement de manière exclusivement manuelle par des opérateurs. Cependant, ces DEEE sont en perpétuelle évolution et ont subi ces dernières années une complexification et/ou miniaturisation, de sorte les piles ou batteries sont souvent très intimement liées à l'appareil, complexifiant ainsi les opérations manuelles visant leur extraction. Ce désassemblage requiert également un outillage de plus en plus spécifique et des temps de plus en plus importants. La manipulation d'outils, parfois lourds, associée à la répétition des opérations, génère également des situations accidentogènes pouvant déboucher sur des accidents ou des incidents. Ces pratiques manuelles longues et délicates impactent donc la sécurité des travailleurs et l'économie du procédé de dépollution/démantèlement des petits DEEE.

Des outils mécanisés existent sur le marché afin de broyer des DEEE (ils sont également appelés « smashers »).

Par exemple, le broyeur Aduro QZ, commercialisé par la société Andritz et présenté comme utile notamment pour les déchets électroniques, permet de briser les DEEE en utilisant les effets des forces d'impact, grâce à des chaînes de battement. Il est composé d'une chambre de démantèlement cylindrique disposée verticalement (l'axe central du cylindre étant vertical) et comprend deux chaînes disposées au fond du cylindre de façon radiale. La fonction des chaînes est de broyer par impacts violents, lorsqu'elles sont en rotation très rapide et donc en tension, les DEEE qui sont alors éclatés/fragmentés. Ce dispositif fonctionne de manière discontinue, par « batch » de matière. Toutefois, ce type de broyeur est essentiellement destiné au broyage de gros DEEE et n'est pas adapté aux appareils de plus petites tailles et même dangereux dans le cadre de l'extraction de piles et batteries. En effet, ce dispositif induit un broyage excessif des déchets, ce qui provoque des dommages sur les piles ou batteries, et par conséquent de fréquents départs de feu, des risques réels de pollution et des difficultés pour recycler ces piles ou batteries ultérieurement.

Un autre exemple de broyeur existant a été commercialisé par la société KM Key Machinery GmbH. Il est constitué d'un cylindre rotatif positionné horizontalement (l'axe central du cylindre étant horizontal), les DEEE se fragmentant selon un processus d'impacts autonomes, sans outil de coupe et sans cisaillement. Toutefois, ce broyeur a également été conçu afin de traiter des DEEE de plus grandes dimensions et l'effet du broyage est totalement insuffisant sur les petits DEEE et ne permet donc pas de libérer efficacement les piles ou batteries qu'ils renferment.

On connaît également de l'art antérieur le document DE202007018261 qui divulgue un dispositif pour le démontage en douceur d'appareils électriques ou électroniques, mais également leur déchiquetage. Il précise qu'il permet la récupération d'éléments tels que des circuits imprimés et des batteries.

En outre, on connait également le document US5322792 qui divulgue un dispositif pour le traitement des déchets ménagers, avec pour objectif le broyage des déchets ménagers en très petites particules pour produire du fertilisant à partir des restes organiques.

Dans un contexte de recyclage de DEEE de petites dimensions avec un taux de recyclage qui est demandé de plus en plus élevé, Il y a donc un grand intérêt de disposer d'un outil mécanisé de démantèlement/désassemblage de DEEE de petites dimensions, permettant d'en extraire efficacement, rapidement, en toute sécurité et sans les endommager les piles ou batteries qui sont encapsulées ou intimement liées à l'appareil et ne permettent donc pas une extraction manuelle optimale. De plus, il serait également utile de disposer d'un tel outil mécanisé qui fonctionne en mode continu (et non par batch) et qui permet également d'extraire les circuits imprimés et condensateurs.

### Objectifs de l'invention

Un objectif de la présente invention est de surmonter les problèmes de l'état de la technique décrits ci-dessus.

En particulier, un objectif de l'invention est de fournir un dispositif qui soit rapide et efficace pour le désassemblage mécanisé de petits DEEE.

Encore un autre objectif de l'invention est de fournir un dispositif de désassemblage mécanisé de DEEE de petites dimensions qui permet la libération des piles et batteries de manière rapide et efficace même si lesdites piles et batteries sont intimement liées dans lesdits DEEE.

Encore un autre objectif de l'invention est de fournir un dispositif de désassemblage mécanisé de DEEE de petites dimensions qui permet la libération des piles et batteries encapsulées, en toute sécurité (c'est-à-dire en limitant très fortement les risques opérationnels liés aux opérations manuelles et/ou à l'endommagement des piles ou batteries, comme par ex., de la pollution et/ou des départs de feu).

Encore un autre objectif de l'invention est de fournir un dispositif de désassemblage mécanisé de DEEE de petites dimensions qui permet la libération des piles et batteries encapsulées, en les préservant dans leur intégrité, permettant ainsi leur recyclage ultérieur.

Encore un autre objectif de l'invention est de fournir un dispositif de désassemblage mécanisé de DEEE de petites dimensions qui permet la libération des piles et batteries encapsulées et fonctionne en mode continu.

Encore un autre objectif de l'invention est de fournir un dispositif de désassemblage mécanisé de DEEE de petites dimensions qui permet d'atteindre un taux de dépollution des DEEE très élevé.

Finalement, un autre objectif de l'invention est de fournir un dispositif de désassemblage mécanisé de DEEE de petites dimensions qui permet également la libération efficace et rapide des circuits imprimés et/ou condensateurs présents dans les DEEE.

### Description de l'invention

Pour atteindre ces objectifs, il est prévu suivant l'invention un dispositif (1) de désassemblage d'une matière, en particulier de déchets d'équipements électriques et électroniques, notamment de petites dimensions, de préférence de dimensions maximales de 40 cm × 50 cm, ledit dispositif comprenant :
- une enceinte (2) de forme cylindrique comprenant une enveloppe périphérique délimitant un volume interne, ladite enceinte étant apte à entrer en rotation autour de son axe central,
- un axe rotatif (3) positionné de façon horizontale, s'étendant le long de l'axe central de ladite enceinte ;
- une pluralité de groupes de chaines (4) positionnés sur ledit axe rotatif, chaque groupe de chaines (4) se composant d'une pluralité de chaînes réparties sur une même section transversale dudit axe ;
- un moyen de mise en rotation de ladite enceinte (5) ;
- un moyen de mise en rotation dudit axe rotatif (6) ;
- un moyen d'alimentation (7) à une première extrémité de ladite enceinte ; et
- un moyen d'évacuation (8) à une deuxième extrémité, opposée à la première, de ladite enceinte ;
ladite enveloppe de l'enceinte étant munie, sur la surface tournée vers le volume interne, des moyens de guidage (9) aptes à faire avancer la matière de la première extrémité à la deuxième extrémité de l'enceinte quand l'enceinte est en rotation.

Il est également prévu suivant l'invention un procédé de désassemblage d'une matière, en particulier de déchets d'équipements électriques et électroniques, utilisant un dispositif (1) selon l'invention, comprenant les étapes suivantes :
- alimentation de la matière à désassembler dans l'enceinte (2) via le moyen d'alimentation (7) ;
- rotation de l'enceinte (2) grâce audit moyen de mise en rotation (5) de l'enceinte, provoquant l'avancement de ladite matière de la première extrémité vers la deuxième extrémité de ladite enceinte ;
- rotation de l'axe rotatif (3) grâce audit moyen de mise en rotation (6) de l'axe rotatif, provoquant la mise sous tension et l'impact des chaines (4) avec la matière, générant la fragmentation de ladite matière ;
- évacuation de la matière fragmentée via le moyen d'évacuation (8).

L'invention est ainsi basée sur une approche nouvelle et inventive. En effet, les inventeurs ont découvert qu'en combinant (i) la rotation à vitesse lente/modérée d'une enceinte cylindrique positionnée de façon horizontale et munie de moyens de guidage sur sa surface interne avec (ii) la rotation à vitesse élevée d'un axe horizontal positionné au centre de l'enceinte et comportant des chaînes de battement, les objectifs précités étaient atteints et les problèmes des broyeurs connus étaient résolus.

En effet, la rotation lente/modérée de l'enceinte et ses moyens de guidage (par ex. plusieurs saillies circonférentielles réparties le long de la direction axiale) assurent l'avancement des matières/DEEE ainsi que leur remontée (du fait de leur densité apparente faible) et chutes successives (cycle de chutes-remontées). En même temps, la rotation à vitesse élevée de l'axe rotatif au centre de l'enceinte permet (i) la mise en tension des chaînes de battage dans la direction perpendiculaire à la direction axiale sous l'effet de la force centrifuge et (ii) leur impact contre les matières à broyer qui sont alors fragmentées lors de leur chute au sein de ladite enceinte ; libérant les piles et/ou batteries qui au vu de leur densité élevée et de leur forme/morphologie tombent et se maintiennent dans le fond de l'enceinte, évitant de cette manière les futurs impacts qui pourraient les endommager.

D'autres caractéristiques, modes de réalisation, détails et avantages de l'invention ressortiront de la description et des figures données ci-après, à titre non limitatif. En particulier :
Les figures 1, 2 et 3 schématisent un mode de réalisation du dispositif selon l'invention, en vue latérale, en vue d'en haut et en vue de biais, respectivement.
La figure 4 montre un organigramme illustrant les étapes du procédé selon un mode de réalisation de l'invention.

Dans la présente description et les revendications, il est bien entendu que les termes « un », « une » ou « le » signifient « au moins un » et ne doivent pas être limités à « un seul », sauf indication contraire explicite. De plus, l'expression « une pluralité » signifie « au moins deux ». Finalement, lorsqu'une plage de valeur est indiquée, les extrémités sont incluses et toutes les valeurs intégrales et de sous-domaine dans une gamme/plage numérique sont expressément incluses comme si explicitement écrites.

Les éléments constitutifs du dispositif de l'invention sont, il va de soi, fabriqués en matériaux suffisamment solides, tels que de l'acier, de l'acier inoxydable ou d'autres aciers spéciaux, spécialement résistants aux impacts et à l'usure.

Selon l'invention, le dispositif (1) comprend une enceinte (2) de forme cylindrique. Cette enceinte (2) est constituée d'une enveloppe périphérique ou paroi, délimitant un volume interne qui accueillera la matière à désassembler.

Toujours selon l'invention, le dispositif (1) comprend un moyen de mise en rotation (5) de l'enceinte, de telle sorte que l'enceinte est apte à entrer en rotation autour de son axe central. Ce moyen de mise en rotation (5) de l'enceinte est, par exemple, un moteur.

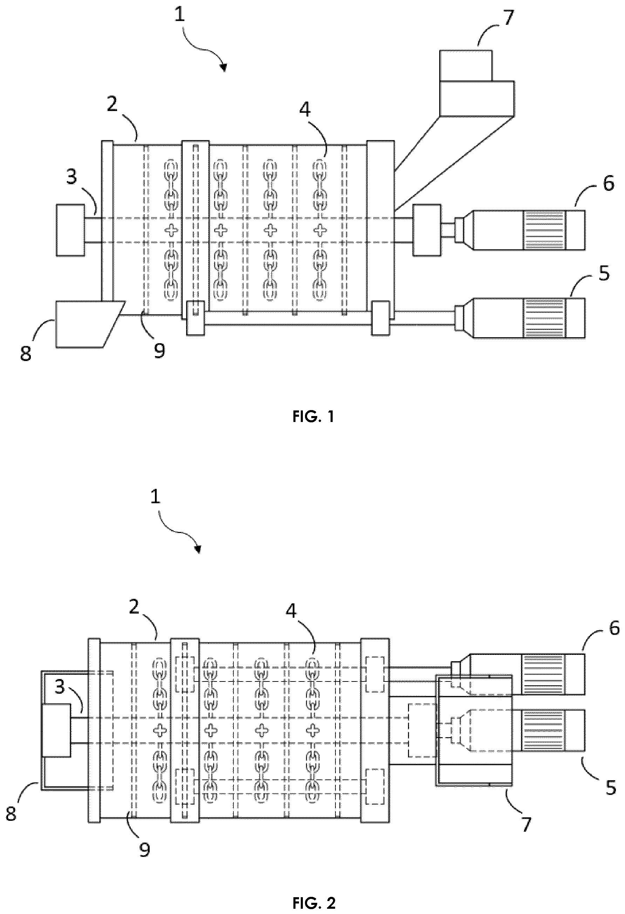

De plus, l'enveloppe de l'enceinte est munie, sur sa surface interne (c'est-à-dire la surface tournée vers le volume interne), de moyens de guidage (9) aptes à faire avancer la matière de la première extrémité à la deuxième extrémité de l'enceinte (d'amont en aval, et le long de la direction définie par l'axe central de l'enceinte cylindrique) quand l'enceinte est en rotation. De préférence, les moyens de guidage (9) , tels qu'illustrés aux Figs.1-3, consistent en une pluralité de saillies circonférentielles continues qui sont réparties le long de la direction axiale de l'enceinte, idéalement espacées uniformément entre elles. Les moyens de guidage peuvent également consister en une ou plusieurs saillies continues en forme de spire ou hélice circulaire.

Le dispositif (1) de l'invention comprend un axe rotatif (3) positionné de façon horizontale, s'étendant le long de l'axe central de ladite enceinte ou, en d'autres mots, la traversant de part en part. L'axe rotatif (3) est relié à un moyen de mise en rotation(6) , tel que par exemple un moteur. Par un axe rotatif (3) positionné de façon horizontale, on entend que l'axe est horizontal dans le dispositif installé ou sensiblement/pratiquement horizontal, l'homme du métier comprenant qu'un écart de maximum quelques degrés par rapport à l'horizontale n'impacterait pas le fonctionnement du dispositif et est donc également couvert par la présente invention.

Le dispositif (1) de l'invention comprend également une pluralité de groupes de chaines (4) positionnés sur l'axe rotatif (3). De préférence, l'axe rotatif (3) comporte au moins trois groupes de chaines (4) ou même, au moins quatre groupes de chaines (4). De préférence également, les groupes de chaines (4) sont espacés uniformément entre eux le long de l'axe rotatif (5).

Selon l'invention, chaque groupe de chaines (4) se compose d'une pluralité de chaînes réparties sur une même section transversale dudit axe. De préférence, les groupes de chaines (4) se composent d'une pluralité de chaînes réparties uniformément sur ladite section transversale. Par exemple, avantageusement, les groupes de chaines (4) se composent de quatre chaînes positionnées à 90° l'une de l'autre sur ladite section transversale. Par « positionnées à 90° l'une de l'autre » ici, on entend y compris pratiquement/sensiblement positionnées à 90°, l'homme du métier comprenant qu'un écart de quelques degrés n'impacterait pas les avantages de ce mode de réalisation du dispositif et est donc également couvert par la présente invention.

Le dispositif de l'invention comprend également un moyen d'alimentation (7) à une première extrémité de ladite enceinte (2), permettant d'acheminer la matière à broyer/démanteler dans le volume interne de l'enceinte, idéalement positionnée dans la partie supérieure de l'enceinte (2). Il peut s'agir, par exemple, d'une ouverture dans l'enveloppe de l'enceinte (2) munie d'une goulotte ou d'une trémie.

Le moyen d'alimentation (7) peut être relié en amont à une bande transporteuse qui permet d'acheminer la matière à broyer audit moyen d'alimentation (7).

Le dispositif (1) de l'invention comprend également un moyen d'évacuation (8) à une deuxième extrémité de ladite enceinte (2), opposée à la première extrémité. De préférence, le moyen d'évacuation (8) ou exutoire est positionné dans la partie inférieure de l'enceinte (2), de sorte qu'il permet l'évacuation de la matière fragmentée par débordement gravitaire. Par exemple, le moyen d'évacuation (8) peut être constitué d'une ouverture, dans la partie inférieure de l'enceinte, munie d'une glissière.

Le moyen d'évacuation (8) peut être relié en aval à une bande transporteuse qui permet d'acheminer la matière fragmentée vers la suite de ligne de traitement, par exemple une table de tri manuel ou une trémie d'alimentation.

Selon un mode de réalisation, le dispositif (1) de l'invention peut comprendre au moins une paroi fixe, de préférence au moins deux parois fixes agencées de part et d'autre de l'enceinte (2) et dans sa longueur, sur lesquelles sont solidarisés le moyen d'alimentation (7) et/ou le moyen d'évacuation (8).

Selon un mode de réalisation avantageux de l'invention, le dispositif (1) comprend également un moyen de filtration, permettant une filtration des poussières dans l'enceinte afin d'éviter qu'elles ne se retrouvent dans l'air ambiant. Le moyen de filtration est, par exemple, constitué par la combinaison d'un ventilateur, d'un filtre et d'un système de décolmatage du filtre (dont un compresseur d'air).

Le procédé de l'invention est un procédé de désassemblage d'une matière, en particulier de déchets d'équipements électriques et électroniques, notamment de petites dimensions, de préférence de dimensions maximales de 40 cm x 50 cm, voire de dimensions maximales 20 cm x 30 cm. Le procédé de l'invention utilise le dispositif (1) de l'invention tel que décrit ci-dessus, y compris dans ses variantes et modes de réalisations.

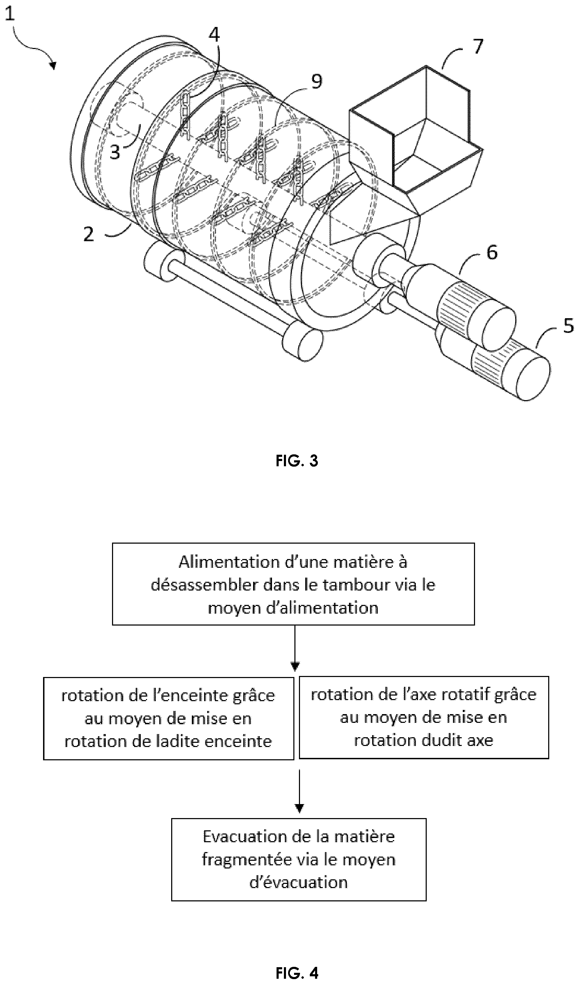

Selon l'invention et tel qu'illustré à la Fig.4, le procédé comprend une étape d'alimentation d'une matière à désassembler dans l'enceinte (2) via le moyen d'alimentation (7). Le procédé peut également comprendre une étape en amont consistant à acheminer la matière vers le moyen d'alimentation (7), par exemple à l'aide d'une bande transporteuse.

Selon l'invention et tel qu'illustré à la Fig.4, le procédé comprend également une étape de rotation de l'enceinte (2) grâce audit moyen de mise en rotation (5) de l'enceinte. Cette étape a pour effet de provoquer l'avancement de la matière de la première extrémité (en amont) vers la deuxième extrémité (en aval) de l'enceinte, du fait de la combinaison de la rotation de l'enceinte (2) et des moyens de guidage (9).

Selon l'invention et tel qu'illustré à la Fig.4, le procédé comprend également une étape de rotation de l'axe rotatif (3) grâce audit moyen de mise en rotation (6) de l'axe rotatif. Cette étape a pour effet de provoquer la mise sous tension des chaînes, sous l'effet de la force centrifuge et leurs impacts avec la matière, provoquant la fragmentation de ladite matière lors de son mouvement de chute.

Selon un mode de réalisation de l'invention, la rotation de l'enceinte (2) se fait de façon concomitante à la rotation de l'axe rotatif (3), ce qui permet l'avancement de la matière couplé à sa fragmentation due aux impacts avec les chaînes.

Le nombre d'impacts occasionnés par la matière est bien entendu fonction du temps de résidence (et donc de la vitesse de rotation de l'enceinte), du nombre de groupes de chaines et de chaînes sur chaque groupe et de la vitesse de rotation de l'axe rotatif.

Selon un mode de réalisation avantageux de l'invention, la rotation de l'axe rotatif (3) se fait à une vitesse 5 à 45 fois plus grande que la rotation de l'enceinte (2). Ceci permet d'avoir une rotation à vitesse lente/modérée pour l'enceinte et une rotation à vitesse rapide pour l'axe rotatif, ce qui est avantageux pour obtenir les effets recherchés (avancement de la matière et fragmentation sans endommager les piles et batteries). Cela vise des débits de désassemblage de l'ordre de 0,5 à 8 t/h. De préférence, selon ce mode de réalisation, la rotation de l'enceinte (2) se fait à une vitesse comprise entre 8 et 15 rpm. De préférence également, la rotation de l'axe rotatif (3) se fait à une vitesse comprise entre 100 et 350 rpm.

De préférence, la rotation de l'axe rotatif (3) se fait à une vitesse 10 à 30 fois plus grande que la rotation de l'enceinte (2). Ceci permet toujours l'avancement de la matière et sa fragmentation sans endommager les piles et batteries, en visant des débits de désassemblage de l'ordre de 2 à 6t/h. De préférence, selon ce mode de réalisation, la rotation de l'enceinte (2) se fait à une vitesse comprise entre 10 et 13 rpm. De préférence également, la rotation de l'axe rotatif (3) se fait à une vitesse comprise entre 150 et 350 rpm.

De manière toute préférée, la rotation de l'axe rotatif (3) se fait à une vitesse 20 à 30 fois plus grande que la rotation de l'enceinte (2). Ceci permet toujours l'avancement de la matière et sa fragmentation sans endommager les piles et batterie, en visant des débits de désassemblage de l'ordre de 2,5-3 à 5t/h.

Selon l'invention et tel qu'illustré à la Fig.4, le procédé comprend finalement une étape d'évacuation de la matière fragmentée via le moyen d'évacuation (8). Cette étape permet de récupérer la matière qui a avancé d'amont en aval et qui, lorsqu'elle se retrouve à la deuxième extrémité de l'enceinte, en sort par le moyen d'évacuation (8).

La matière fragmentée récupérée peut ensuite être acheminée sur la suite de la ligne pour poursuivre son traitement. Par exemple, après l'étape d'évacuation, la matière fragmentée est acheminée, notamment à l'aide d'une bande transporteuse, vers un poste de tri manuel où sont prélevés, par au moins un opérateur, les piles, batteries, condensateurs et/ou circuits imprimés. Le procédé de démantèlement de l'invention permet par exemple d'atteindre un débit de traitement entre 0.5 et 8 t/h.

Selon un autre mode de réalisation, ladite étape d'évacuation de la matière fragmentée se fait par débordement gravitaire, par exemple grâce à une ouverture, dans la partie inférieure de l'enveloppe de l'enceinte (2), munie d'une glissière.

Selon encore un autre mode de réalisation, après l'étape d'évacuation, une partie de la matière fragmentée est alimentée de nouveau dans l'enceinte via le moyen d'alimentation (7). Ceci est avantageux lorsque la matière n'a pas été suffisamment démantelée/fragmentée à l'issue d'un premier passage dans le dispositif. Par exemple, cette matière insuffisamment fragmentée peut être prélevée par des opérateurs au niveau du poste de tri manuel où sont également prélevées les piles, batteries, condensateurs et/ou circuits imprimés.

Finalement, l'invention concerne également l'utilisation d'un dispositif (1) selon l'invention pour broyer des déchets, en particulier pour désassembler des déchets d'équipements électriques et électroniques de petites dimensions, de préférence de dimensions maximales de 40 cm x 50 cm.

Tout autre type de déchets industriels ou ménagers contenant des piles, des batteries, des condensateurs et/ou des circuits imprimés peuvent être considérés dans l'invention.

Il est bien entendu que la présente invention n'est en aucune façon limitée aux formes de réalisations décrites ci-dessus et que des modifications peuvent y être apportées sans sortir du cadre des revendications. Il est en outre entendu que l'invention englobe également toutes les combinaisons possibles de caractéristiques et de caractéristiques préférées, décrites ici et citées dans les revendications.

De plus, les exemples suivants sont fournis à des fins d'illustration et ne sont pas destinés à limiter la portée de la présente invention.

### Exemples

### Exemple selon l'invention

On a traité plusieurs flux de DEEE de petites dimensions (flux n°1-2-3 ; max. 40 cm x 50 cm), triés au préalable en fonction de leurs dimensions, dans un dispositif selon l'invention et selon le procédé de l'invention.

Le dispositif utilisé pour démanteler le flux de petits DEEE dans le présent exemple avait les caractéristiques suivantes (et de configuration telles qu'illustrée aux Figures 1, 2 et 3) :
- une enceinte de forme cylindrique, de diamètre d'environ 1230 mm et de longueur 2000 mm, montée en rotation grâce à un moteur et munie sur sa surface interne de saillies circonférentielles continues réparties de façon uniforme le long de la direction axiale de l'enceinte ;
- un axe rotatif horizontal s'étendant le long de l'axe central de l'enceinte et relié à un moteur;
- 4 groupes de 4 chaînes fixées sur l'axe rotatif, les groupes étant espacés de façon uniformes entre eux sur l'axe et, pour chaque groupe, les 4 chaines étant positionnées à ~90° l'une de l'autre sur une même section transversale de l'axe
- une goulotte d'alimentation située à une première extrémité de l'enceinte, située dans sa partie supérieure;
- une glissière d'évacuation (ou exutoire) à une deuxième extrémité de l'enceinte située dans sa partie inférieure ; et
- un système de filtration des poussières dans l'enceinte.

Chaque flux de matières testées (petits DEEE) a été alimentée indépendamment dans le dispositif via la goulotte d'alimentation qui se déverse dans l'enceinte par sa partie supérieure. La matière a été acheminée en amont par une bande transporteuse, elle-même alimentée par une trémie vibrante comprenant le stock de matière à traiter.

La rotation de l'enceinte (11 à 12 rpm) concomitante à la rotation de l'axe rotatif portant les chaines en tension (280 à 320 rpm) entraîne l'avancement de la matière d'amont en aval et leur fragmentation par impacts. La matière qui a parcouru toute la longueur de l'enceinte cylindrique arrive alors au niveau de la glissière d'évacuation où elle s'évacue par débordement gravitaire, sur un bande convoyeuse qui mène alors la matière fragmentée sur un tapis de tri manuel. A cette étape de tri manuel, huit postes de travail (donc huit opérateurs) ont été prévus. Les opérateurs ont extrait du tapis, dans des bacs de récolte spécifiques, les piles, batteries et condensateurs présents, ainsi que les DEEE pas suffisamment broyés, les autres fragments ont été laissés sur la tapis et acheminés vers la suite de la ligne de traitement (tri des plastiques, métaux, etc.). Les DEEE qui n'ont pas été suffisamment broyés ont été réalimentés dans le dispositif (recirculation).

Le tableau 1 présente une description de chaque flux traité dans le présent exemple ainsi que leurs résultats à l'issue du désassemblage. Les flux 1-2-3 sont constitués de petits DEEE de tailles croissantes : dimensions DEEE du flux n°1 < dimensions DEEE du flux n°2 < dimensions DEEE du flux n°3.

**Tableau 1**

| | **Flux n°1** | **Flux n°2** | **Flux n°3** |
|---|---|---|---|
| **Description** | écouteurs sans fils ; boîtiers de rechargement d'écouteurs sans fils ; commandes à distance ; sonnettes ; étiquettes de prix digitales ; clés de voiture ; GPS tracker ; briquets plasma ; ... | brosses à dents; rasoirs; tondeuses ; télécommandes ; téléphones sans fil ; GSM ; smartphones ; souris d'ordinateur ; cigarettes électroniques ; produits de vapotage ; appareils photos ; lampes de poche/ torches ; objets connectés tels que montres ; montres ; GPS ; détecteurs de fumée ou de mouvement ; enceintes portables ; Go Pro ; caméras digitales ; batteries externes ; dashcam ; babyphones ; lampes et lumières LED (y compris dans vêtements et objets tels que casques) ; ... | visseuses et outils sans fils ; lave-vitres ; petits aspirateurs à main ; sèche-cheveux ; mixers, tire-bouchons ; radios ; jouets électriques et loisirs ; consoles ; drônes ; ... |
| (liste non exhaustive) | | | |
| **Capacité de démantèlement** | 6 t/h | 4 t/h | 3 t/h |
| **Taux de démantèlement** | 50-75 % | 80-90 % | 75-80 % |
| **Recirculation** | 25-50 % | 10-20 % | 20-25 % |
| **Proportion de piles extraites** | 15-20 % | 8-16 % | 6-8 % |
| **Circuits imprimés** | < 1 % | < 1 % | < 1 % |

Les résultats obtenus en moyenne avec le dispositif et le procédé de l'invention sont excellents :
- Capacité de démantèlement (débit de sortie): 4 t/h
- Taux de démantèlement : 80%
- Taux de recirculation de la charge alimentée : 20%
- Proportion de piles extraites : 6 à 12%
- Évacuation associée de circuits imprimés : < 1 %
- Qualité des piles extraites : très bonne, peu voire pas d'endommagement
- Départ de feu très rares et facilement maîtrisés.

De plus, les résultats spécifiques pour le flux n°1, constitués de DEEE de très petites tailles, sont remarquables dans la mesure où leur petites tailles rend souvent leur désassemblage extrêmement compliqués voire impossible avec des dispositifs classiques ou manuellement.

Finalement, comparativement aux statistiques connues dans le cas d'un démantèlement et tri manuel et aux moyennes du secteur, le dispositif et procédé de l'invention permettent d'atteindre 25% d'extraction de piles, batteries et circuit imprimés supplémentaires.

### Exemples comparatifs

Trois broyeurs connus et disponibles sur le marché ont été testés pour démanteler les mêmes flux de petits DEEE :
- Smasher de la société KM Key Machinery GmbH, constitué d'un tambour rotatif horizontal (rotation 180/5), fragmentant la matière selon un processus d'impacts autonomes, sans outil de coupe, sans chaines et sans cisaillement : le niveau de démantèlement/broyage observé a été totalement insuffisant et n'a donc pas permis de libérer efficacement les piles et batteries.
- Broyeur à marteaux de Laarman, constitué d'un simple axe rotatif horizontal sur lequel sont positionnés des marteaux (rotation > 800 rpm) : le niveau de démantèlement/broyage observé a été également totalement insuffisant et n'a donc pas permis de libérer efficacement les piles et batteries ; et
- Broyeur Aduro QZ (Andritz), constitué d'une chambre de démantèlement cylindrique disposée verticalement et de deux chaînes de battage disposées au fond du cylindre de façon radiale et en rotation (700 rpm) : il a provoqué un broyage trop excessif de la matière et, par conséquent, endommagé les piles et batteries et généré pollution et départs de feu systématiques.

## Revendications

1. Dispositif de désassemblage d'une matière (1), ladite matière étant constituée de déchets d'équipements électriques et électroniques, ledit dispositif comprenant :
- une enceinte (2) de forme cylindrique comprenant une enveloppe périphérique délimitant un volume interne, ladite enceinte étant apte à entrer en rotation autour de son axe central,
- un axe rotatif (3) positionné de façon horizontale, s'étendant le long de l'axe central de ladite enceinte (2) ;
- une pluralité de groupes de chaines (4) positionnés sur ledit axe rotatif (3), chaque groupe de chaines se composant d'une pluralité de chaînes réparties sur une même section transversale dudit axe ;
- un moyen de mise en rotation de ladite enceinte (5) ;
- un moyen de mise en rotation dudit axe rotatif (6) ;
- un moyen d'alimentation (7) à une première extrémité de ladite enceinte (2) ; et
- un moyen d'évacuation (8) à une deuxième extrémité, opposée à la première, de ladite enceinte (2) ;
ladite enveloppe de l'enceinte (2) étant munie, sur la surface tournée vers le volume interne, des moyens de guidage (9) apte à faire avancer la matière de la première extrémité à la deuxième extrémité de l'enceinte (2) quand l'enceinte est en rotation.

2. Dispositif selon la revendication précédente, **caractérisé en ce que** les moyens de guidage (9) consistent en une pluralité de saillies circonférentielles continues réparties le long de la direction axiale de l'enceinte.

3. Dispositif selon l'une des revendications précédentes, **caractérisé en ce qu'**il comporte au moins trois groupes de chaines, de préférence au moins quatre groupes de chaines.

4. Dispositif selon l'une des revendications précédentes, **caractérisé en ce que** les groupes de chaines se composent d'une pluralité de chaînes réparties uniformément sur une même section transversale dudit axe.

5. Dispositif selon la revendication précédente, **caractérisé en ce que** les groupes de chaines se composent de quatre chaînes positionnées à 90° l'une de l'autre sur la section transversale dudit axe.

6. Procédé de désassemblage de déchets d'équipements électriques et électroniques, utilisant un dispositif (1) selon l'une des revendications 1 à 5, comprenant les étapes suivantes :
- alimentation d'une matière à désassembler dans l'enceinte (2) via le moyen d'alimentation (7) ;
- rotation de l'enceinte (2) grâce audit moyen de mise en rotation de l'enceinte (5), provoquant l'avancement de ladite matière de la première extrémité vers la deuxième extrémité de ladite enceinte ;
- rotation de l'axe rotatif (3) grâce audit moyen de mise en rotation de l'axe rotatif (6), provoquant la mise sous tension et l'impact desdites chaînes avec la matière, générant la fragmentation de ladite matière ;
- évacuation de la matière fragmentée via le moyen d'évacuation (8).

7. Procédé selon la revendication précédente, **caractérisé en ce que** la rotation de l'enceinte (2) se fait de façon concomitante à la rotation de l'axe rotatif (3).

8. Procédé selon l'une des revendications 6 à 7, **caractérisée en ce que** la rotation de l'axe rotatif (3) se fait à une vitesse 5 à 45 fois plus grande que la rotation de l'enceinte (2).

9. Procédé selon la revendication précédente, **caractérisée en ce que** la rotation de l'enceinte (2) se fait à une vitesse comprise entre 8 et 15 rpm.

10. Procédé selon l'une des revendications 8 et 9, **caractérisé en ce que** la rotation de l'axe rotatif (3) se fait à une vitesse comprise entre 100 et 350 rpm.

11. Procédé selon l'une des revendications 6 à 10, **caractérisé en ce que** ladite étape d'évacuation de la matière fragmentée se fait par débordement gravitaire.

12. Procédé selon l'une des revendications 6 à 11, **caractérisé en ce que**, après l'étape d'évacuation, ladite matière fragmentée est acheminée, notamment à l'aide d'une bande transporteuse, vers un poste de tri manuel où sont prélevés, par au moins un opérateur, les piles, batteries, condensateurs et/ou circuits imprimés.

13. Utilisation d'un dispositif (1) selon l'une des revendications 1 à 5, pour désassembler une matière, ladite matière étant constituée de déchets d'équipements électriques et électroniques.
